# EUROPÄISCHE PATENTSCHRIFT

(11) **EP 1 721 807 B1**
(45) Veröffentlichungstag und Bekanntmachung des Hinweises auf die Patenterteilung: **18.07.2007**
(21) Anmeldenummer: 06113850.9
(22) Anmeldetag: 12.05.2006
(51) Int. Cl.: B62D 5/00, F16D 41/08

(54) **Überlagerungsgetriebe für eine Überlagerungslenkung**
Superposed gear for a superimposed steering system
Transmission superposée pour direction à superposition

(30) Priorität: 14.05.2005 DE 102005022409
(43) Veröffentlichungstag der Anmeldung: 15.11.2006
(73) Patentinhaber: ZF-Lenksysteme GmbH, 73527 Schwäbisch Gmünd (DE)
(72) Erfinder: Kruttschnitt, Andreas, 89522 Heidenheim (DE); Rupp, Arthur, 73460 Hüttlingen (DE); Schust, Achim, 74405 Gaildorf (DE); Hörsch, Jürgen, 74417, Gschwend (DE); Glaesser, Thomas, 73529 Schwäbisch Gmünd (DE)

(56) Entgegenhaltungen:
- WO-A-03/099630
- WO-A-20/04103799
- DE-A1- 10 323 042

## Beschreibung

Die Erfindung betrifft ein Überlagerungsgetriebe, insbesondere für eine Überlagerungslenkung eines Fahrzeugs, nach dem Oberbegriff des Anspruchs 1.

Überlagerungsgetriebe insbesondere für ein Fahrzeug sind bekannt und zeichnen sich dadurch aus, dass dem von einem Fahrer eines Fahrzeugs an einer Lenkhandhabe gewählten Lenkwinkel bei Bedarf ein weiterer Drehwinkel überlagert werden kann. Der zusätzliche Drehwinkel wird über einen von einer Steuerungs-und/oder Regelungseinrichtung gesteuerten Aktuator auf ein Überlagerungsglied des Überlagerungsgetriebes aufgeprägt. Das Überlagerungsgetriebe dient so zur Erhöhung der Fahrstabilität des Fahrzeugs oder zu sonstigen Zwecken. Bei solchen Überlagerungsgetrieben besteht grundsätzlich die Notwendigkeit, dass die Momentenrückwirkung auf die Überlagerungswelle klein oder nicht vorhanden ist, da bei Ausfall des Aktuators an dem Überlagerungsglied sowohl von seiten eines Eingangsglieds des Überlagerungetriebes, das mit einer Lenkhandhabe wirkverbunden ist, als auch von seiten eines Ausgangsglieds oder einer Abtriebswelle des Überlagerungsgetriebes keine Rückwirkungen auf den Aktuator stattfinden darf, da sonst der Lenkwinkel der an der Lenkhandhabe eingegeben wird, etwa in eine Motordrehung des Aktuators umgewandelt wird und nicht zur Lenkwinkelverstellung an einem gelenkten Rad oder an gelenkten Rädern des Fahrzeugs dient.

Die DE 199 06 703 A1 beschreibt ein Stellglied zum überlagerten Lenkeingriff in einer Fahrzeug-Lenkvorrichtung, mit einem Überlagerungsgetriebe das als Planetenradgetriebe ausgebildet ist. Ein Eingangsglied oder eine Eingangswelle, welche mit einer Lenkhandhabe wirkverbunden ist, kann bei einer Fehlfunktion des Servomotors des Stellglieds mit einer Ausgangswelle des Überlagerungsgetriebes mit Hilfe einer elektromagnetischen Bremse fest verbunden werden. Eine Relativbewegung der Eingangswelle zu der Ausgangswelle ist damit zwar verhindert, die elektromagnetische Bremse hat aber ein großes Bauvolumen, es besteht die Möglichkeit, dass die Bremsbeläge anfrieren können oder bei Verschmutzung durch ölhaltige oder fettige Betriebsstoffe eine Fehlfunktion der Bremse möglich ist. Zudem bedürfen solche Bremsen u.U. großer Schaltströme.

Die DE 103 15 704 A1 offenbart eine Hilfskraftlenkung mit einem Überlagerungs-getriebe, welches eine mechanische Sperrmöglichkeit vorsieht. Solche mechanischen Sperren gewährleisten zwar ein sicheres Verriegeln, sind aber weniger geeignet gegeneinander rotierende oder sich bewegende Teile zu verriegeln, da sie zu Verschleiß oder gar zu Bruch neigen.

Ein Überlagerungsgetriebe dessen Einrichtung zur Herstellung eines Verriegelungszustandes der Glieder des Überlagerungsgetriebes hydraulisch arbeitet, offenbart die DE 31 21 008 C2, wobei in einem als Hydraulikzylinder ausgebildeten Servomotor für das Überlagerungsgetriebe Federn angeordnet sind, die einen Kolben bei Ausfall der hydraulischen Steuerung in eine Neutralstellung führen. Die Einrichtung zur Herstellung eines Verriegelungszustandes ist nicht in das Überlagerungsgetriebe integriert. WO 03/099630 offenbart ein Überlagerungsgetriebe nach dem Oberbegriff des Anspruchs 1.

Der Erfindung liegt die Aufgabe zugrunde, ein Überlagerungsgetriebe mit einer Einrichtung zur Herstellung eines Verriegelungszustandes der Glieder des Überlagerungsgetriebes zu schaffen, welches klein baut und sicher und zuverlässig ist.

Die Aufgabe wird mit einem Überlagerungsgetriebe mit den Merkmalen des Anspruchs 1 gelöst.

Dadurch dass die Einrichtung zur Herstellung eines Verriegelungszustandes in dem Überlagerungsgetriebe angeordnet ist und direkt durch die Einrichtung das Eingangsglied und das Ausgangsglied oder das Eingangsglied und das Überlagerungsglied oder das Überlagerungsglied und ein Gehäuse des Überlagerungsgetriebes in einen Verriegelungszustand gebracht sind, indem die jeweiligen, nicht gehäusefesten Glieder gekoppelt drehbar sind, ist ein kompaktes und sicher und zuverlässig arbeitendes Überlagerungsgetriebe geschaffen.

Bevorzugte Ausführungen ergeben sich aus den Unteransprüchen.

Es ist zweckmäßig, jeweils zwei Glieder des Überlagerungsgetriebes bei Ausfall des Servomotors durch die Einrichtung zur Herstellung eines Verriegelungszustandes miteinander in einen Verriegelungszustand zu bringen und die übrigen Glieder des Überlagerungsgetriebes zwingend frei drehbar zu gestalten. Um die Einrichtung zur Herstellung eines Verriegelungszustandes auch zwischen den relativ zueinander rotierenden Gliedern des Überlagerungsgetriebes sicher verriegelbar zu gestalten, ist eine Kombination aus einer schaltbaren oder nicht schaltbaren Kupplung und einem formschlüssigen Verriegelungsmechanismus sinnvoll. Die Kupplungen können sowohl formschlüssig sein, sind bevorzugt aber kraftschlüssig. Reibkupplungen als kraftschlüssige Schaltkupplungen bieten den Vorteil, dass sie während der Bewegung der relativ zueinander rotierenden Glieder ein - und ausgerückt werden können und durch die Reibkraft in ihrem Drehmoment begrenzt sind. Dadurch arbeiten sie sanft.

Die Kupplungen können richtungsbetätigt im Sinne eines Freilaufs, der auch automatisch zweirichtungsgeschaltet sein kann, ausgeführt sein, oder durch Kraftmittel betätigt sein, etwa im Sinne einer fernschaltbaren Reibkupplung. Als zweirichtungsgeschaltete Kupplung eignet sich ein Klemmfreilauf in Form eines Klemmrollenfreilaufs oder Klemmkörperfreilaufs. Eine Freilaufkupplung mit Klemmrollen besteht aus einem Aussenring, einem Innenring mit keilförmig ausgebildeten Klemmflächen und den zwischen beiden Ringen angeordneten Klemmrollen, die mittels Druckbolzen durch Federelemente an den Aussenring gedrückt werden. Wird der Aussenring gegen den Innenring gedreht, so werden die Klemmrollen in den Klemmspalten festgeklemmt und übertragen die Umfangskraft kraftschlüssig zwischen Aussenring und Innenring. Die Kraftmittel können ein elektromagnetisches, ein elektrohydraulisches, ein elektromechanisches oder ein pneumatisches Wirkprinzip haben.

Als Überlagerungsgetriebe kann jedwede geeignete Getriebebauform, wie ein Planetenradgetriebe oder ein Wellgetriebe (harmonic-drive) angewandt werden. Das als Wellgetriebe ausgebildete Überlagerungsgetriebe weist ein Eingangsglied auf, das als Eingangswelle die drehfest mit einer Lenkwelle oder Lenkhandhabe verbunden ist, ausgebildet ist. Ferner weist das Wellgetriebe ein Ausgangsglied auf, das als Abtriebswelle für das Überlagerungsgetriebe dient und an dessen getriebeinneren Ende ein zylinderförmiger Stützring (circular-spline) angeordnet ist. Als Überlagerungsglied des Wellgetriebes dient ein exzentrischer Antriebskern der mit einem Servomotor zur Aufprägung des Überlagerungs-Drehwinkels wirkverbunden ist. Der exzentrische Antriebskern, der insbesondere ellipsenförmig gebildet ist, greift axial in eine radialflexible Abrollbuchse (flex-spline) des Wellgetriebes ein, wobei ein oder mehrere Umfangsabschnitte einer Außenmantelfläche der radialflexiblen Abrollbuchse in fortlaufendem Wechsel mit dem zylinderförmigen Stützring über jeweils eine Verzahnung an dem zylinderförmigen Stützring und der radialflexiblen Abrollbuchse in Eingriff gelangen. Da der Umfang der Außenmantelfläche der radialflexiblen Abrollbuchse kürzer als der Umfang des zylinderförmigen Stützringes ist, dreht sich der zylinderförmige Stützring um diese Längendifferenz und somit das mit dem zylinderförmigen Stützring verbundene Getriebeausgangsglied, das wiederum mit einem Getriebeeingangsglied eines Lenkgetriebes verbunden sein kann.

Das Eingangsglied und das Ausgangsglied sind über diese radialflexible Abrollbuchse relativ zueinander drehbar verbunden, da die radialflexible Abrollbuchse entweder an der Eingangswelle oder der Abtriebswelle des Wellgetriebes festgelegt ist. Auf diese Weise ist es ermöglicht, einen positiven oder negativen Lenkwinkel zusätzlich zu dem vom Fahrer an der Lenkhandhabe eingegebenen Lenkwinkel in eine Lenkwelle eines Fahrzeugs einzugeben.

Die Einrichtung zur Herstellung eines Verriegelungszustandes kann zwischen der Eingangs- und Ausgangswelle des Wellgetriebes angeordnet sein und der exzen-trische Antriebskern, der mit dem Servomotor wirkverbunden ist, bleibt zwingend frei drehbar.

Die Einrichtung zur Herstellung eines Verriegelungszustandes kann auch zwischen der Eingangswelle und dem exzentrischen Antriebskern angeordnet sein, wobei die Abtriebswelle zwingend frei drehbar bleibt. Es kann auch zweckmäßig sein, die Einrichtung zur Herstellung eines Verriegelungszustandes zwischen der Abtriebswelle und dem exzentrischen Antriebskern anzuordnen und die Eingangswelle zwingend frei drehbar zu wählen oder die Einrichtung zur Herstellung eines Verriegelungszustandes zwischen dem exzentrischen Antriebskern und dem Gehäuse des Wellgetriebes anzuordnen wobei bei einem Verriegelungszustand der Einrichtung die Eingangswelle und die Abtriebswelle zwingend gekoppelt drehbar sind.

Das Überlagerungsgetriebe mit der verschiedenartig angeordneten Einrichtung zur Herstellung eines Verriegelungszustands kann in einem hydraulischen, elektrohydraulischen oder elektrischen Lenksystem für einen Personenkraftwagen oder leichten Nutzkraftwagen oder in einem sonstigen Fahrzeug eingesetzt werden.

Die Erfindung wird nun näher anhand eines Ausführungsbeispiels beschrieben und anhand der beiliegenden Zeichnung wiedergegeben.

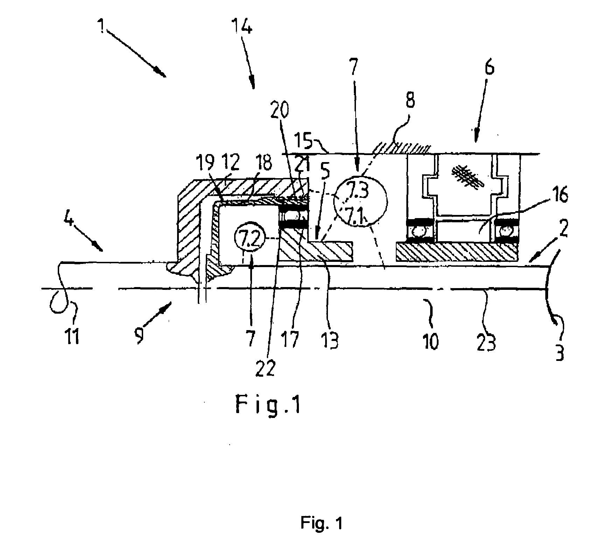

Fig. 1 zeigt einen teilweisen Längsschnitt durch ein erfindungsgemäßes Überlagerungsgetriebe.

In Fig. 1 ist in einem teilweisen Längsschnitt ein als Überlagerungslenkung (active steering) ausgebildetes Lenksystem 14 für ein Fahrzeug gezeigt. Die Überlagerungslenkung ist als elektrische Überlagerungslenkung aus einem Servomotor 6, der an einem fahrzeugfesten Bauteil 15, das nicht die Lenksäule des Fahrzeugs ist, einem Überlagerungetriebe 1 mit einem Eingangsglied 2 das drehfest mit einer Lenkhandhabe 3 verbunden ist und einem Ausgangsglied 4 gebildet. Zur relativen Verdrehung des Ausgangsglieds 4 zu dem Eingangsglied 2 dient ein Überlagerungsglied 5. Das Ausgangsglied 4 ist mit einem Getriebeeingangsglied eines nicht gezeigten Lenkgetriebes wirkverbunden. Das Lenkgetriebe kann Teil einer elektrischen oder hydraulischen oder elektrohydraulischen Hilfskraftlenkung sein.

Der Servomotor 6 stellt einen zusätzlichen Lenkwinkel auf das Überlagerungsgetriebe 1, das als Wellgetriebe 9 (harmonic- drive) gebildet ist, bereit. Ein Rotor 16 des Servomotors 6 ist zu diesem Zweck mit dem Überlagerungsglied 5, das als exzentrischer, vorzugsweise ellipsenförmiger Antriebskern 13 gebildet ist, verbunden. Um den Umfang des exzentrischen Antriebskernes 13 ist ein flexibles Kugellager 17 aufgezogen. Der exzentrische Antriebskern 13 greift in eine beispielsweise aus Stahlblech gebildete, topfförmige, radialflexible Abrollbuchse 18 (flex-spline) ein, wobei der exzentrische Antriebskern 13 drehbar auf einer Eingangswelle 10, die das mit der Lenkhandhabe 3 verbundene E ingangsglied 2 des Überlagerungetriebes 1 bildet, gelagert ist.

Die radialflexible Abrollbuchse 18 weist eine Außenmantelfläche 19 auf, die im axialen Bereich des flexiblen Kugellagers 17 eine Aussenverzahnung 20 trägt. Die Aussenverzahnung 20 greift unter Wirkung der exzentrischen Aufweitung der radialflexiblen Abrollbuchse 18 mit zwei Umfangsabschnitten in eine Innenverzahnung 21 an einer zylinderförmigen Stützfläche 22 eines drehfest mit einer Abtriebswelle 11 des Überlagerungetriebes 1 verbundenen zylinderförmigen Stützrings 12 (circular-spline) ein. Die Abtriebswelle 11 bildet das Ausgangsglied 4 des Überlagerungs-getriebes 1. Der zylinderförmige Stützring 12 ist konzentrisch zu der Längsachse 23 der Eingangwelle 10 und der Abtriebswelle 11 angeordnet. Bei Rotation des exzentrischen Antriebskerns 13 erfolgt die insbesondere ellipsenförmige Aufweitung in fortlaufendem Wechsel entlang der Innenverzahnung 21. Der innenverzahnte Stützring 12 weist eine größere Zähnezahl als die Aussenverzahnung 20 der radialflexiblen Abrollbuchse 18 auf, wodurch eine Verdrehung des Stützringes 12 pro Umdrehung des exzentrischen Antriebskerns 13 um die Differenz der Zähnezahl erfolgt.

Die von der Eingangswelle 10 und der Abtriebswelle 11 gebildete Lenkwelle ist im axialen Bereich des Stützringes 12 somit getrennt. Auf diese Weise kann das Ausgangsglied 4 durch das Überlagerungsgetriebe 1 verdreht werden und ein von Fahrt- und Fahrzeugparametern abhängiger Lenkwinkel in die Lenkwelle vor dem Lenkgetriebe eingegeben werden. Um zu verhindern, dass bei Ausfall des Servomotors eine Rückwirkung von seiten der Lenkhandhabe oder des Lenkgetriebes auf den Servomotor in dem Sinne erfolgt, dass der Rotor des Servomotors verdreht wird und damit die Wirkung eines Lenksäulenbruchs mit der Konsequenz eines Lenkungsversagens auftreten kann, ist eine Einrichtung 7 zur Herstellung eines Verriegelungszustandes im Inneren des Gehäuses 8 des Überlagerungetriebes 1 vorgesehen. Die Einrichtung 7 zur Herstellung eines Verriegelungszustandes verhindert bei Ausfall des Servomotors eine Drehmöglichkeit der Eingangswelle 10 oder des Eingangsglieds 2 relativ zu der Abtriebswelle 11 oder des Ausgangsgliedes 4 und ermöglicht, dass ein an der Lenkhandhabe 3 eingegebener Lenkwinkel mit einem festen Übersetzungsverhältnis an die Abtriebswelle 11 abgegeben wird.

Die Einrichtung 7 zur Herstellung eines Verriegelungszustandes in dem Überlagerungsgetriebe 1 kann eine Verriegelung zwischen dem Eingangsglied 2 und dem Ausgangsglied 4 oder eine Verriegelung zwischen dem Eingangsglied 2 und dem Überlagerungsglied 5 herstellen. Es kann auch zweckmäßig sein damit einen Verriegelungszustand zwischen dem Überlagerungsglied 5 und dem Gehäuse 8 des Überlagerungsgetriebes 1 zu erreichen. In jedem Fall wird bei einem Verriegelungszustand sichergestellt, dass die jeweiligen nicht gehäusefesten Glieder gekoppelt drehbar sind. Die übrigen Glieder des Überlagerungsgetriebes 1 sind zwingend frei drehbar.

Um den Verriegelungsvorgang auch bei relativ zueinander sich bewegenden Getriebegliedern zu ermöglichen, ist die Einrichtung 7 bevorzugt aus einer Kombination einer schaltbaren oder nicht schaltbaren Kupplung und aus einem formschlüssigen Verriegelungsmechanismus gebildet. Das ermöglicht zudem eine Verringerung der Baugröße der Einrichtung gegenüber bekannten Einrichtungen und eine Anordnung der Einrichtung 7 in dem Überlagerungsgetriebe 1.

In Fig. 1 sind verschiedene alternative Positionen der Einrichtung 7 zur Herstellung eines Verriegelungszustandes gezeigt. So kann die Einrichtung 7 zwischen der Eingangswelle 10 und der Abtriebswelle 11 angeordnet sein (Position 7.1), wobei in einem Verriegelungszustand der Einrichtung 7 der exzentrische Antriebskern 13 zwingend frei drehbar ist.

Die Einrichtung 7 zur Herstellung eines Verriegelungszustandes kann auch zwischen der Eingangswelle 10 und dem exzentrischen Antriebskern 13 angeordnet sein, (Position 7.2) wobei dann in einem Verriegelungszustand die Abtriebswelle 12 zwingend frei drehbar bleibt. Es kann auch zweckmäßig sein, die Einrichtung 7 zwischen dem Gehäuse 8 und dem exzentrischen Antriebskern 13 anzuordnen (Position 7.3), wobei dann die Eingangswelle 10 in einem Verriegelungszustand zwingend frei drehbar bleibt.

Die Kupplung der Einrichtung 7 zur Herstellung eines Verriegelungszustandes kann kraftschlüssig ausgeführt sein, wie etwa als Zweiflächenkupplung oder Sinus- Lamellenkupplung oder als Conax-Reibkupplung oder als ConaLus-Kupplung um bei sich relativ zueinander bewegenden Getriebegliedern einen Reibschluß und anschließend einen Formschluß durch den zu der Einrichtung 7 gehörenden formschlüssigen Verriegelungsmechanismus zu bewerkstelligen. Die Kupplung kann durch Kraftmittel, wie pneumatische oder hydraulische Servozylinder, durch Elektromagnete usw. bewegte Steller betätigt sein. Es kann auch zweckmäßig sein, die Kupplung als automatisch zweirichtungsgeschaltete Kupplung, wie etwa einen Klemmfreilauf, als Klemmrollenfreilauf oder Klemmkörperfreilauf auszubilden.

## Patentansprüche

1. Überlagerungsgetriebe, insbesondere für eine Überlagerungslenkung eines Fahrzeugs, mit einem Eingangsglied (2) das mit einer Lenkhandhabe (3) wirkverbunden ist und mit einem Ausgangsglied (4) das mit einem gelenkten Rad wirkverbunden ist und mit einem Überlagerungsglied (5) das zur Relativbewegung des Eingangsgliedes (2) und Ausgangsgliedes (4) mit einem Servomotor (6) wirkverbunden ist und mit einer Einrichtung (7) zur Herstellung eines Verriegelungszustandes der Glieder (2,4,5) des Überlagerungsgetriebes (1), **dadurch gekennzeichnet, dass** die Einrichtung (7) zur Herstellung eines Verriegelungszustandes in dem Überlagerungsgetriebe (1) angeordnet ist und durch die Einrichtung (7) zur Herstellung eines Verriegelungszustandes das Eingangsglied (2) und das Ausgangsglied (4) oder das Eingangsglied (2) und das Überlagerungsglied (5) oder das Überlagerungsglied (5) und ein Gehäuse (8) des Überlagerungsgetriebes (1) in einen Verriegelungszustand gebracht sind in dem die jeweiligen nicht gehäusefesten Glieder (2,4,5) gekoppelt drehbar sind.

2. Überlagerungsgetriebe nach Anspruch 1, **dadurch gekennzeichnet, dass** durch die Einrichtung (7) zur Herstellung eines Verriegelungszustandes jeweils zwei Glieder (2,4,5) des Überlagerungsgetriebes (1) miteinander in einen Verriegelungszustand gebracht sind und die übrigen Glieder (2,4,5) des Überlagerungsgetriebes (1) zwingend frei drehbar sind.

3. Überlagerungsgetriebe nach Anspruch 1 oder 2, **dadurch gekennzeichnet, dass** die Einrichtung (7) zur Herstellung eines Verriegelungszustandes aus einer Kombination aus einer schaltbaren oder nicht schaltbaren Kupplung und einem formschlüssigen Verriegelungsmechanismus gebildet ist.

4. Überlagerungsgetriebe nach Anspruch 3, **dadurch gekennzeichnet, dass** die Kupplung kraftschlüssig oder formschlüssig ist.

5. Überlagerungsgetriebe nach Anspruch 3 oder 4, **dadurch gekennzeichnet, dass** die Kupplung richtungsbetätigt oder durch Kraftmittel fremdbetätigt ist.

6. Überlagerungsgetriebe nach einem der Ansprüche 3 bis 5, **dadurch gekennzeichnet, dass** die Kupplung eine automatisch zweirichtungsgeschaltete Kupplung ist.

7. Überlagerungsgetriebe nach Anspruch 6, **dadurch gekennzeichnet, dass** die automatisch zweirichtungsgeschaltete Kupplung ein Klemmfreilauf, ein Klemmrollenfreilauf oder ein Klemmkörperfreilauf ist.

8. Überlagerungsgetriebe nach einem der Ansprüche 5 bis 7, dass die Kraftmittel elektromagnetisch, elektrohydraulisch, elektromechanisch oder pneumatisch sind.

9. Überlagerungsgetriebe nach einem der Ansprüche 1 bis 8, **dadurch gekennzeichnet, dass** das Überlagerungsgetriebe (1) ein Planetenradgetriebe ist.

10. Überlagerungsgetriebe nach einem der Ansprüche 1 bis 8, **dadurch gekennzeichnet, daß** das Überlagerungsgetriebe (1) ein Wellgetriebe (9) ist, dessen Eingangsglied (2) eine Eingangswelle (10) ist, die drehfest mit der Lenkhandhabe (3) verbunden ist und dessen Ausgangsglied (4) eine Abtriebswelle (11) ist, die drehfest mit einem zylinderförmigen Stützring (12) (circular-spline) verbunden ist und dessen Überlagerungsglied (5) ein exzentrischer Antriebskern (13) (wave-generator) ist.

11. Überlagerungsgetriebe nach Anspruch 10, **dadurch gekennzeichnet, dass** die Einrichtung (7) zur Herstellung eines Verriegelungszustandes zwischen der Eingangswelle (10) und der Abtriebswelle (11) angeordnet ist und der exzentrische Antriebskern (13) zwingend frei drehbar ist.

12. Überlagerungsgetriebe nach Anspruch 10, **dadurch gekennzeichnet, dass** die Einrichtung (7) zur Herstellung eines Verriegelungszustandes zwischen der Eingangswelle (10) und dem exzentrischen Antriebskern (13) angeordnet ist und die Abtriebswelle (11) zwingend frei drehbar ist.

13. Überlagerungsgetriebe nach Anspruch 10, **dadurch gekennzeichnet, dass** die Einrichtung (7) zur Herstellung eines Verriegelungszustandes zwischen der Abtriebswelle (11) und dem exzentrischen Antriebskern (13) angeordnet ist und die Eingangswelle (10) zwingend frei drehbar ist.

14. Überlagerungsgetriebe nach Anspruch 10, **dadurch gekennzeichnet, dass** die Einrichtung (7) zur Herstellung eines Verriegelungszustandes zwischen dem exzentrischen Antriebskern (13) und dem Gehäuse (8) des Wellgetriebes (9) angeordnet ist und bei einem Verriegelungszustand auch die Eingangswelle (10) und die Abtriebswelle (11) zwingend gekoppelt drehbar sind.

15. Überlagerungsgetriebe nach einem der Ansprüche 1 bis 14, **dadurch gekennzeichnet, dass** das Überlagerungsgetriebe (1) in einem hydraulischen, elektrohydraulischen oder elektrischen Lenksystem (14) für einen Personenkraftwagen oder leichten Nutzkraftwagen eingesetzt ist.

## Claims

1. Superposition gearing, in particular for a superposition steering system of a vehicle, having an input element (2) which is operatively connected to a steering handle (3) and having an output element (4) which is operatively connected to a steered wheel, and having a superposition element (5) which, for the relative movement of the input element (2) and output element (4), is operatively connected to a servo motor (6), and having a device (7) for producing a locked state of the elements (2, 4, 5) of the superposition gearing (1), **characterized in that** the device (7) for producing a locked state is arranged in the superposition gearing (1), and, by means of the device (7) for producing a locked state, the input element (2) and the output element (4) or the input element (2) and the superposition element (5) or the superposition element (5) and a housing (8) of the superposition gearing (1) are placed in a locked state in which the respective elements (2, 4, 5) which are not fixed to the housing are rotatable in a coupled fashion.

2. Superposition gearing according to Claim 1, **characterized in that**, by means of the device (7) for producing a locked state, in each case two elements (2, 4, 5) of the superposition gearing (1) are placed in a locked state with one another, and the other elements (2, 4, 5) of the superposition gearing (1) are coercively freely rotatable.

3. Superposition gearing according to Claim 1 or 2, **characterized in that** the device (7) for producing a locked state is formed from a combination of a switchable or non-switchable clutch and a form-fitting locking mechanism.

4. Superposition gearing according to Claim 3, **characterized in that** the clutch is force-fitting or form-fitting.

5. Superposition gearing according to Claim 3 or 4, **characterized in that** the clutch is directionally actuated or externally actuated by force means.

6. Superposition gearing according to one of Claims 3 to 5, **characterized in that** the clutch is an automatically bi-directional clutch.

7. Superposition gearing according to Claim 6, **characterized in that** the automatically bi-directional clutch is a clamping freewheel, a clamping roller freewheel or a clamping body freewheel.

8. Superposition gearing according to one of Claims 5 to 7, **characterized in that** the force means are electromagnetic, electrohydraulic, electromechanical or pneumatic.

9. Superposition gearing according to one of Claims 1 to 8, **characterized in that** the superposition gearing (1) is a planetary gear set.

10. Superposition gearing according to one of Claims 1 to 8, **characterized in that** the superposition gearing (1) is a harmonic drive (9) whose input element (2) is an input shaft (10) which is rotationally fixedly connected to the steering handle (3) and whose output element (4) is a drive output shaft (11) which is rotationally fixedly connected to a cylindrical thrust ring (12) (circular spline) and whose superposition element (5) is an eccentric drive core (13) (wave generator).

11. Superposition gearing according to Claim 10, **characterized in that** the device (7) for producing a locked state is arranged between the input shaft (10) and the drive output shaft (11), and the eccentric drive core (13) is coercively freely rotatable.

12. Superposition gearing according to Claim 10, **characterized in that** the device (7) for producing a locked state is arranged between the input shaft (10) and the eccentric drive core (13), and the drive output shaft (11) is coercively freely rotatable.

13. Superposition gearing according to Claim 10, **characterized in that** the device (7) for producing a locked state is arranged between the drive output shaft (11) and the eccentric drive core (13), and the input shaft (10) is coercively freely rotatable.

14. Superposition gearing according to Claim 10, **characterized in that** the device (7) for producing a locked state is arranged between the eccentric drive core (13) and the housing (8) of the harmonic drive (9), and in a locked state, the input shaft (10) and the drive output shaft (11) are also rotatable in a coercively coupled fashion.

15. Superposition gearing according to one of Claims 1 to 14, **characterized in that** the superposition gearing (1) is used in a hydraulic, electrohydraulic or electrical steering system (14) for a passenger vehicle or light utility vehicle.

## Revendications

1. Transmission superposée notamment pour une direction à superposition d'un véhicule, avec un organe d'entrée (2) coopérant avec une manette de direction (3), et avec un organe de sortie (4) coopérant avec une roue articulée, et avec un organe de superposition (5) coopérant avec un servomoteur (6) pour le mouvement relatif de l'organe d'entrée (2) et de l'organe de sortie (4), et avec un dispositif (7) pour l'établissement d'un état de verrouillage des organes (2, 4, 5) de la transmission superposée (1), **caractérisée en ce que** le dispositif (7) pour l'établissement d'un état de verrouillage est disposé dans la transmission superposée (1) et **en ce que** l'organe d'entrée (2) et l'organe de sortie (4) ou l'organe d'entrée (2) et l'organe de superposition (5) ou l'organe de superposition (5) et un carter (8) de la transmission superposée (1) sont mis dans un état de verrouillage par le dispositif (7) pour l'établissement d'un état de verrouillage, état dans lequel les organes (2, 4, 5) respectifs non immobilisés par rapport au carter peuvent tourner de manière accouplée.

2. Transmission superposée selon la revendication 1, **caractérisée en ce qu'**à chaque fois deux organes (2, 4, 5) de la transmission superposée (1) peuvent être ensemble mis dans un état de verrouillage par le dispositif (7) pour l'établissement d'un état de verrouillage et **en ce que** les autres organes (2, 4, 5) de la transmission superposée (1) peuvent obligatoirement tourner librement.

3. Transmission superposée selon la revendication 1 ou 2, **caractérisée en ce que** le dispositif (7) pour l'établissement d'un état de verrouillage est constitué d'une combinaison d'un accouplement embrayable ou non et d'un mécanisme de verrouillage à engagement positif.

4. Transmission superposée selon la revendication 3, **caractérisée en ce que** l'accouplement est à adhérence ou à engagement positif.

5. Transmission superposée selon la revendication 3 ou 4, **caractérisée en ce que** l'accouplement est commandé de manière directionnelle ou extérieurement par des moyens d'actionnement.

6. Transmission superposée selon l'une des revendications 3 à 5, **caractérisée en ce que** l'accouplement est un accouplement automatique à commande bidirectionnelle.

7. Transmission superposée selon la revendication 6, **caractérisée en ce que** l'accouplement automatique à commande bidirectionnelle est une roue libre verrouillable, une roue libre à rouleaux de blocage ou une roue libre à éléments de blocage.

8. Transmission superposée selon l'une des revendications 5 à 7, **caractérisée en ce que** les moyens d'actionnement sont électromagnétiques, électrohydrauliques, électromécaniques ou pneumatiques.

9. Transmission superposée selon l'une des revendications 1 à 8, **caractérisée en ce que** la transmission superposée (1) est une transmission planétaire.

10. Transmission superposée selon l'une des revendications 1 à 8, **caractérisée en ce que** la transmission superposée (1) est une transmission à arbres (9) dont l'organe d'entrée (2) est un arbre d'entrée (10) relié de manière fixe en rotation à une manette de direction (3) et dont l'organe de sortie (4) est un arbre de sortie (11) relié de manière fixe en rotation à une couronne d'appui (12) de forme cylindrique (circular-spline) et dont l'organe de superposition (5) est un noyau d'actionnement excentrique (13) (wave-generator).

11. Transmission superposée selon la revendication 10, **caractérisée en ce que** le dispositif (7) pour l'établissement d'un état de verrouillage est disposé entre l'arbre d'entrée (10) et l'arbre de sortie (11) et **en ce que** le noyau d'actionnement excentrique (13) tourne obligatoirement librement.

12. Transmission superposée selon la revendication 10, **caractérisée en ce que** le dispositif (7) pour l'établissement d'un état de verrouillage est disposé entre l'arbre d'entrée (10) et le noyau d'actionnement excentrique (13) et **en ce que** l'arbre de sortie (11) tourne obligatoirement librement.

13. Transmission superposée selon la revendication 10, **caractérisée en ce que** le dispositif (7) pour l'établissement d'un état de verrouillage est disposé entre l'arbre de sortie (11) et le noyau d'actionnement excentrique (13) et **en ce que** l'arbre d'entrée (10) tourne obligatoirement librement.

14. Transmission superposée selon la revendication 10, **caractérisée en ce que** le dispositif (7) pour l'établissement d'un état de verrouillage est disposé entre le noyau d'actionnement excentrique (13) et le carter (8) de l'entraînement à arbres (9) et **en ce que**, à l'état verrouillé, l'arbre d'entrée (10) et l'arbre de sortie (11) peuvent également obligatoirement tourner de manière accouplée.

15. Transmission superposée selon l'une des revendications 1 à 14, **caractérisée en ce que** la transmission superposée (1) est mise en oeuvre dans un système de direction (14) hydraulique, électrohydraulique ou électrique pour une voiture particulière ou des véhicules utilitaires légers.
